# EUROPÄISCHE PATENTANMELDUNG

(11) **EP 1 237 250 A2**
(43) Veröffentlichungstag der Anmeldung: **04.09.2002**
(21) Anmeldenummer: 02003793.3
(22) Anmeldetag: 20.02.2002
(51) Int. Cl.: H02J 13/00, H04L 12/28

(54) **Hausleitsystem**

(30) Priorität: 28.02.2001 DE 10109488
(71) Anmelder: Merten GmbH & Co. KG, 51674 Wiehl (DE)
(72) Erfinder: Ludorf, Wilhelm S., 72622 Nürtingen (DE); Kuhnert, Jürgen, Dipl.-Ing., 51702 Bergneustadt (DE)
(74) Vertreter: Selting, Günther, Dipl.-Ing.

(57) **Zusammenfassung**

Das Hausleitsystem zur Steuerung, Regelung und/oder Überwachung von Zuständen in einem in Räume (11-1 bis 11-7) unterteilten Gebäude (10) weist zahlreiche Teilnehmerstationen (15) auf, die Sensoren, Aktoren oder Datenverarbeitungsgeräte enthalten und miteinander Datentelegramme austauschen. Mehrere Umsetzer (13) sind durch ein drahtgebundenes Netz (12) miteinander verbunden, das in dem Gebäude fest installiert ist. Jedem Umsetzer (13) ist ein Funknetz (16) zugeordnet, das einen der Räume (11-1 bis 11-7) erfasst. Dieser Umsetzer (13) kommuniziert uni- oder bidirektional mit den Teilnehmerstationen (15) des betreffenden Raumes. Durch die Aufteilung des Netzwerks in ein drahtgebundenes Netz (12) und mehrere Funknetze (16) ist eine hohe Flexibilität bei geringem Installationsaufwand gewährleistet.

## Beschreibung

Die Erfindung betrifft ein Hausleitsystem zur Steuerung, Regelung und/oder Überwachung von Objekten in einem in Räume unterteilten Gebäude, mit in den Räumen stationär angeordneten Teilnehmerstationen, die Sensoren, Aktoren oder Datenverarbeitungsgeräte enthalten und miteinander Datentelegramme austauschen.

Durch EP 0 344 609 A2 ist ein System der Hausleittechnik (Hausleitsystem) bekannt, das zahlreiche in einem Gebäude verteilt angeordnete und durch ein drahtgebundenes Busnetz miteinander kommunizierende Teilnehmerstationen aufweist. Die Teilnehmerstationen enthalten jeweils eine Universalschnittstelle und einen gerätespezifischen Adapter, der in Abhängigkeit von einem anzuschließenden externen Gerät aufgebaut ist. Im einfachsten Fall dient eine Teilnehmerstation zum Schalten einer Leuchte, während eine andere davon entfernt angeordnete Teilnehmerstation die Schaltbefehle erzeugt, entweder auf manuelle Betätigung eines Schalters oder durch einen Sensor, z.B. Lichtsensor. Andere Aufgaben, die von einem Hausleitsystem typischerweise ausgeführt werden, sind die Regelung eines Heizungs- oder Lüftungssystems, das Betätigen von Rollläden, das Bedienen von Haushaltsgeräten wie Wasch- oder Spülmaschinen. Die Teilnehmerstationen des Hausleitsystems kommunizieren untereinander, indem sie Datentelegramme austauschen. Diese enthalten u.a. die Adresse der sendenden und der empfangenden Teilnehmerstation. Der Datenverkehr erfolgt unmittelbar zwischen den Teilnehmerstationen, ohne dass eine Zentrale oder ein Server vorhanden wäre. Dadurch ist das System gut ausbaufähig.

Bei bestehenden Gebäuden ist die Installation eines drahtgebundenen Hausleitsystems schwierig, weil zahlreiche Kabel verlegt werden müssen. Zur Vermeidung von Kabeln wird gelegentlich eine Funkstrecke benutzt. Ein Funknetz, das zahlreiche Teilnehmerstationen enthalten müsste und sich über eine erhebliche Fläche erstrecken würde, hätte jedoch den Nachteil, dass benachbarte Netzstrukturen sich gegenseitig massiv stören würden. Für den Fall, dass gesicherte Übertragungsverfahren implementiert werden, kommt die Nachricht zwar sicher an, jedoch ist die Übertragungsleistung gering.

Der Erfindung liegt die Aufgabe zugrunde, ein Hausleitsystem zu schaffen, das wenig Installationsaufwand erfordert und bei dem gegenseitige Störungen vermieden werden.

Die Lösung dieser Aufgabe erfolgt erfindungsgemäß mit den im Patentanspruch 1 angegebenen Merkmalen. Hiernach sind in dem Gebäude mehrere über ein drahtgebundenes Netz miteinander kommunizierende Umsetzer installiert, die jeweils durch ein Funknetz mit mindestens einer Teilnehmerstation kommunizieren. Das Hausleitsystem ist somit in der Kombination mehrerer lokal verteilter Funknetze, die die einzelnen Teilnehmerstationen enthalten, mit einem übergeordneten drahtgebundenen Netz, das die Umsetzer enthält. So kann der Problematik der ausschließlich funkbetriebenen Netze durch ein Hybrid-Netz begegnet werden. Es ist lediglich erforderlich, an geeigneten Stellen im Gebäude Umsetzer zu installieren, die anschließend den Datenverkehr per Funk mit den einzelnen Teilnehmerstationen durchführen. Daher reicht es aus, die Umsetzer mit Kabeln untereinander zu verbinden. Die Übertragung zwischen zwei Teilnehmerstationen, die unterschiedlichen Funknetzen angehören, erfolgt über die Umsetzer des drahtgebundenen Netzes.

Mit dem erfindungsgemäßen Hausleitsystem können die Funktionen, die von der Gebäudeautomatisierung her bekannt sind, problemlos implementiert werden. Diese sind beispielsweise die Einzelraumsteuerung für Heizung und Klima, Lichtszenensteuerung, Jalousiesteuerung sowie weitere Überwachungs- und Komfortfunktionen. Bei ausreichend hoher Übertragungskapazität sind noch weitere Dienste möglich, wie Sprach- und Musikübertragung, Dokumenten- und Dateientransfer und auch Bewegtbildübertragungen. Sollen weitere Dienste und Applikationen hinzukommen, so ist es bei vorhandenem Funknetz lediglich erforderlich, die betreffenden Teilnehmerstationen aufzustellen, jedoch müssen keine zusätzlichen Verlegearbeiten von Datenkabeln oder Kanälen durchgeführt werden.

Vorzugsweise ist die Reichweite der Umsetzer und/oder der Teilnehmerstationen, die einem Funknetz angehören, auf denjenigen Raum beschränkt, in dem sie angeordnet sind. Diese Beschränkung der Reichweite kann einerseits durch die Bemessung der Funkleistung geschehen. Andererseits kann die Funkfrequenz so ausgewählt werden, dass die Funkwellen durch Raumwände stark gedämpft werden. Da jedes Funknetz auf einen Raum (ein Zimmer) des Gebäudes beschränkt ist, ist sichergestellt, dass sämtliche Teilnehmerstationen von den Funkwellen erreicht werden, notfalls nach Reflexionen. Die Gefahr von Abschattungen und Totzonen ist sehr gering. Außerdem werden gegenseitige Störungen von Funknetzen, die sich in benachbarten Räumen befinden, vermieden.

Das Hausleitsystem arbeitet mit Teilnehmerstationen, die in den Räumen stationär angeordnet sind, wobei Teilnehmerstationen vorhanden sind, die Sensoren, Aktoren oder Datenverarbeitungsgeräte enthalten. Darüber hinaus sind jedoch noch andere Teilnehmerstationen möglich, beispielsweise Videostationen. Obwohl bei der Hausleittechnik stationäre Teilnehmerstationen vorhanden sind, ist es nicht zwingend erforderlich, dass sämtliche Teilnehmerstationen, die mit einem Umsetzer zusammenwirken, stationär sind. Es können auch beispielsweise Mobilteile von Telefonen als Teilnehmerstationen benutzt werden.

Das drahtgebundene Netz, das die Umsetzer enthält, kann als Stern, Linie oder Baum ausgebildet sein. Typischerweise haben die Funknetze eine Übertragungskapazität von 1 Mbit/s und das drahtgebundene Netz, das die Umsetzer enthält, hat eine Übertragungsrate von 10 Mbit/s. Die drahtgebundenen Netze, die jeweils eine horizontale Struktur bilden, können jeweils über einen Zugangspunkt mit einem Overlay-Netz verbunden sein, das eine vertikale Struktur darstellt und Übertragungsraten von mindestens 10 Mbit/s hat, insbesondere in der Größenordnung von 100 Mbit/s. Jede Anbindung eines Netzes an eine übergeordnete Struktur erfolgt durch einen Switch oder einen Router. Dadurch wird das übergeordnete Netz von jedwedem Datenaufkommen freigehalten, das in dem betreffenden Netz nicht notwendig ist.

Die Funknetze sind durch die Umsetzer an das übergeordnete drahtgebundene Netz angeschlossen. Diese Umsetzer dienen einerseits als Basisstation für die Funknetze (Master-Funktion) und andererseits als Gateway zum überlagerten drahtgebundenen Netz. Damit werden die aufkommenden Datenpakete geroutet. Dies bedeutet, dass nur solche Datenpakete, die eine Zieladresse außerhalb des Funknetzes haben, auf das drahtgebundene Netz durchgelassen werden.

Schließlich sind auch gebäudeübergreifende Verbindungen durch ein weiteres übergeordnetes Netz möglich.

Unter einem drahtgebundenen Netz sollen im Rahmen der Erfindung sowohl Kupferleitungen als auch Lichtwellenleitungen verstanden werden.

Im folgenden werden unter Bezugnahme auf die Zeichnungen Ausführungsbeispiele der Erfindung näher erläutert.

Es zeigen:
- Fig. 1: einen schematischen Plan eines Gebäudes mit dem darin angeordneten Hausleitsystem, und
- Fig. 2: eine Darstellung mehrerer Stockwerke in dem Gebäude, wobei die drahtgebundenen horizontalen Netze jeweils durch ein vertikales Overlay-Netz verbunden und wiederum mehrere Overlay-Netze untereinander verbunden sind.

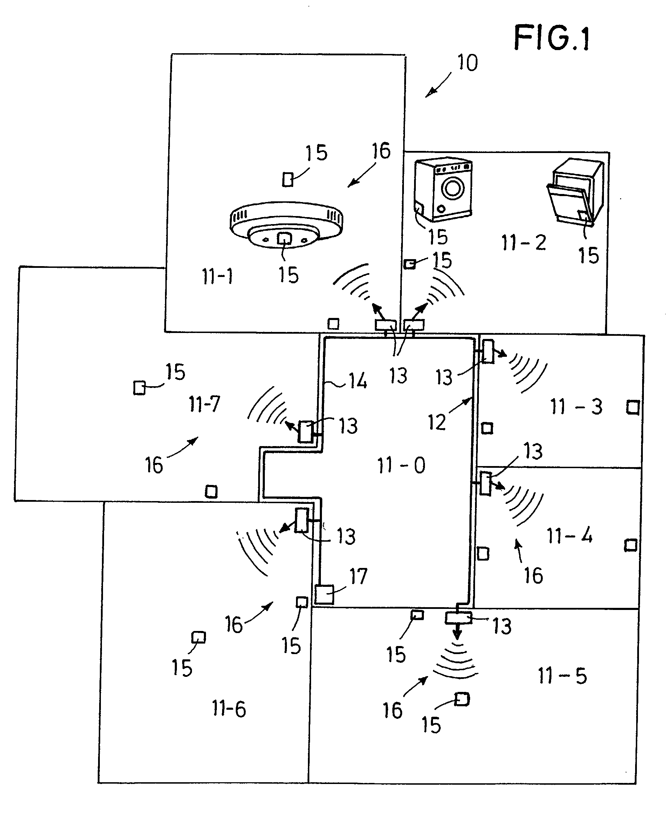

Gemäß Fig. 1 ist ein Gebäude 10 innerhalb eines Stockwerks in zahlreiche Räume 11-1 bis 11-7 unterteilt, die sich um einen zentralen Flur 11-0 gruppieren. In dem Flur 11-0 ist ein drahtgebundenes Netz 12 installiert, das zahlreiche Umsetzer 13 aufweist. Die Umsetzer 13 sind in den jeweiligen Räumen 11-1 bis 11-7 installiert, wobei jeder Umsetzer in einem anderen Raum angeordnet ist. Bei größeren Räumen können auch zwei oder mehr Umsetzer in demselben Raum angeordnet sein.

Die Umsetzer 13 sind durch eine Busleitung 14 untereinander verbunden. Jeder Umsetzer 13 kann Datentelegramme erzeugen und aussenden, die entsprechend den in ihnen enthaltenen Zieladressen ausschließlich für einen bestimmten anderen Umsetzer 13 bestimmt sind. Jedes Datentelegramm enthält außer den zu sendenden Daten auch die Adresse des sendenden und die Adresse des empfangenden Umsetzers.

Jeder Umsetzer 13 ist ferner mit einer drahtlosen Sende- und Empfangseinrichtung versehen, so dass er Funksignale in den betreffenden Raum 11-1 bis 11-7 aussenden und auch Funksignale aus dem Raum empfangen kann. Der Umsetzer 13 führt einen Austausch von Datentelegrammen mit Teilnehmerstationen 15 aus, die sich in dem Raum befinden. Es gibt Teilnehmerstationen 15, die einen Sensor enthalten, der beispielsweise auf die Betätigung eines Schalters reagiert, oder einen Brandsensor, einen Helligkeitssensor, einen Temperatursensor, einen Tür- oder Fenstersensor zur Feststellung des Öffnungszustandes. Andere Teilnehmerstationen 15 enthalten Aktuatoren zur Durchführung von Schalt- oder Einstellvorgängen. Eine Teilnehmerstationen, die sich in dem Raum 11-1 befindet, kann beispielsweise ein Datentelegramm an eine Teilnehmerstation senden, die sich in dem Raum 11-5 befindet. Die Teilnehmerstationen 15 haben je nach Funktion eine drahtlose Sende- oder Empfangseinrichtung, oder eine drahtlose Sende- und Empfangseinrichtung, die mit dem dem betreffenden Raum zugeordneten Umsetzer 13 Funksignale austauschen kann. Folglich bildet jeder Umsetzer 13 mit den Teilnehmerstationen 15 des betreffenden Raumes ein Funknetz 16. Jedes Funknetz 16 ist auf den betreffenden Raum 11-1 bis 11-7 beschränkt und es ist so ausgelegt, dass seine Reichweite die Raumgrenzen nicht überschreitet. Dies kann dadurch geschehen, dass die Sendeleistung die Raumwände nicht durchdringt oder dass die Funknetze 16 mit unterschiedlichen Frequenzen betrieben werden. Der Datenverkehr zwischen den Teilnehmerstationen 15 und dem Umsetzer 13 ist unidirektional oder bidirektional. Der Datenverkehr zwischen den Umsetzern 13 untereinander ist bidirektional.

Die Funknetze 16 haben niedrigere Übertragungsraten als das drahtgebundene Netz 12. Folglich muss in den Umsetzern 13 eine Umsetzung der Datentelegramme von dem einen Netz in das andere erfolgen. Die Kommunikation von Teilnehmerstationen, die in unterschiedlichen Räumen 11-1 bis 11-7 angeordnet sind, erfolgt zunächst in dem Funknetz 16, in dem sich die sendende Station befindet, dann zwischen den beiden beteiligten Umsetzern 13 des drahtgebundenen Netzes 12 und schließlich in dem Funknetz 16, in dem sich die adressierte empfangende Teilnehmerstation befindet. Da bei einer solchen Datenübertragung in der Regel nur zwei Umsetzer 13 beteiligt sind, ist die Netzlast des drahtgebundenen Netzes relativ gering. In dem drahtgebundenen Netz 12 sind alle Teilnehmerstationen 13 gleichberechtigt und es gibt keine Zentrale.

Der Datenverkehr zwischen Teilnehmerstation 15, die in demselben Raum angeordnet sind, erfolgt ausschließlich über den diesem Raum zugeordneten Umsetzer 13, ohne dass das drahtgebundene Netz 12 durchlaufen würde. Hierbei wirkt der Umsetzer 13 als Zentrale.

Es sind aber auch Lösungen denkbar, bei denen die einzelnen Teilnehmer in einem Funknetz direkt miteinander kommunizieren und der (intelligente) Umsetzer die meiste Zeit nur mithört und sich nur bei Bedarf in die Kommunikation einschaltet. Dieser Bedarf tritt zum einen dann auf, wenn Nachrichten von Teilnehmern in einem Funknetz an Teilnehmer in einem anderen Funknetz übermittelt werden sollen, dann werden diese Nachrichten via Umsetzer und drahtgebundenes Netz vermittelt. Außerdem sind Situationen denkbar, bei denen die Ausdehnung eines logischen Funknetzes räumlich so groß wird, dass eine sichere Kommunikation zwischen allen Teilnehmern nicht immer gewährleistet ist. Dann kann der Umsetzer Repeaterfunktionen in seinem Funknetz übernehmen, indem er dann eine Nachricht nochmals wiederholt (repeatet), wenn es sich um eine Nachricht handelt, auf die eine Bestätigung folgen muss und diese Bestätigung nach einer vorgegebenen Zeit nicht eingetroffen ist.

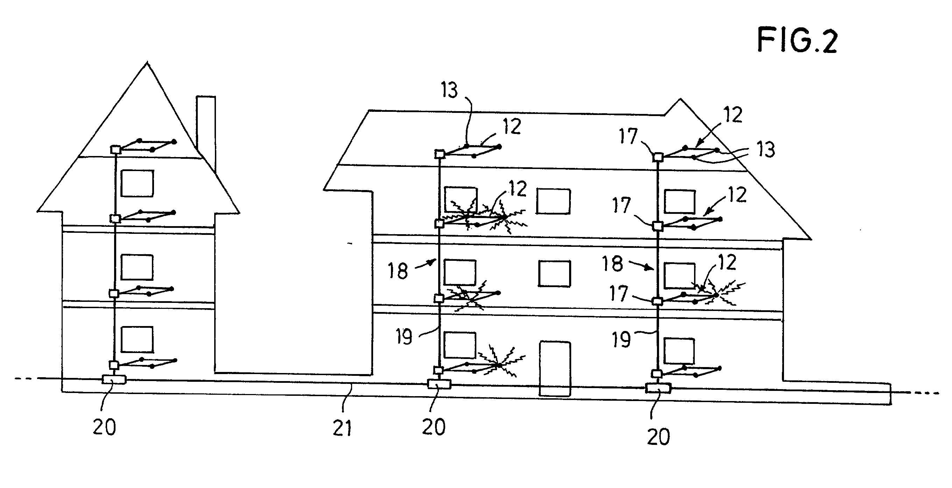

Das drahtgebundene Netz 12 in einem Stockwerk eines Gebäudes bildet mit den zugehörigen Funknetzen 16 eine horizontale Netzstruktur. In dem drahtgebundenen Netz 12 befindet sich ein Zugangspunkt 17 zum Zusammenschalten dieses Netzes mit anderen Netzen in einem Overlay-Netz 18. Figur 2 zeigt Gebäude, bei denen in jedem Stockwerk ein drahtgebundenes Netz 12 installiert ist, das mehrere zu Funknetzen gehörende Umsetzer 13 aufweist. Die Zugangspunkte 17 sind durch einen vertikalen Bus 19 verbunden, so dass Overlay-Netze 18 gebildet werden. Jedes Overlay-Netz 18 enthält einen Übergabepunkt 20, der mit einem Universal-Bus 21 verbunden ist, welcher mehrere Gebäude untereinander verbindet. Auf diese Weise entsteht eine Netzstruktur zwischen Gebäuden mit unterschiedlichen Netzhierarchien. Dabei ist es prinzipiell möglich, dass jede Teilnehmerstation in irgendeinem Gebäude mit jeder Teilnehmerstation in irgendeinem anderen Gebäude Datentelegramme austauscht.

Für die Funknetze 16 können übliche Nahübertragungs-Funkstrecken eingesetzt werden, wie beispielsweise die Bluetooth-Technologie oder die DECT-Technologie. Auf diese Weise ist eine einfache und kostengünstige Realisierung der Erfindung möglich.

## Patentansprüche

1. Hausleitsystem zur Steuerung, Regelung und/oder Überwachung von Zuständen in einem in Räume (11-1 bis 11-7) unterteilten Gebäude (10), mit in den Räumen stationär angeordneten Teilnehmerstationen (15), die Sensoren, Aktoren oder Datenverarbeitungsgeräte enthalten und miteinander Datentelegramme austauschen,
**dadurch gekennzeichnet ,**
**dass** im Gebäude (10) mehrere über ein drahtgebundenes Netz (12) miteinander kommunizierende Umsetzer (13) installiert sind, die jeweils durch ein Funknetz (16) mit mindestens einer Teilnehmerstation (15) kommunizieren.

2. Hausleitsystem nach Anspruch 1, **dadurch gekennzeichnet, dass** die Reichweite der Umsetzer (13) auf den Raum (11-1 bis 11-7) beschränkt ist, in dem sie angeordnet sind.

3. Hausleitsystem nach Anspruch 1 oder 2, **dadurch gekennzeichnet, dass** die Reichweite der Teilnehmerstationen (15) auf den Raum (11-1 bis 11-7) beschränkt ist, in dem sie angeordnet sind.

4. Hausleitsystem nach einem der Ansprüche 1-3, **dadurch gekennzeichnet, dass** die Umsetzer (13) jeweils nur die anderen Umsetzer (13) adressieren, zu deren Funknetz (16) die anzusprechenden Teilnehmerstationen (15) gehören.

5. Hausleitsystem nach einem der Ansprüche 1-4, **dadurch gekennzeichnet, dass** das drahtgebundene Netz (12) eine höhere Übertragungsrate hat als die Funknetze (16).

6. Hausleitsystem nach einem der Ansprüche 1-5, **dadurch gekennzeichnet, dass** mehrere drahtgebundene Netze (12) jeweils über einen Zugangspunkt (17) durch ein Overlay-Netz (18) verbunden sind.

7. Hausleitsystem nach Anspruch 6, **dadurch gekennzeichnet, dass** die drahtgebundenen Netze (12) sich jeweils in einem anderen Stockwerk des Gebäudes erstrecken.
